# FASCICULE DE BREVET EUROPEEN

(11) **EP 4 496 692 B1**
(45) Date de publication et mention de la délivrance du brevet: **11.02.2026**
(21) Numéro de dépôt: 23714790.5
(22) Date de dépôt: 13.03.2023
(51) Int. Cl.: B29C 35/02, B29C 33/02, B29C 70/38

(54) **PROCEDE AMELIORE DE FABRICATION D'UNE PEAU POUR MOTEUR AERONAUTIQUE**
VERBESSERTES VERFAHREN ZUR HERSTELLUNG EINER HAUT FÜR EINEN AERONAUTISCHEN MOTOR
IMPROVED METHOD FOR THE MANUFACTURE OF A SKIN FOR AN AERONAUTICAL ENGINE

(30) Priorité: 22.03.2022 FR 2202543
(43) Date de publication de la demande: 29.01.2025
(73) Titulaire: SAFRAN, 75015 Paris (FR)
(72) Inventeur: DUNLEAVY, Patrick, 77550 MOISSY-CRAMAYEL (FR); DA SILVA, Marc, 77550 MOISSY-CRAMAYEL (FR); HENRAT, Patrick, 77550 MOISSY-CRAMAYEL (FR)
(74) Mandataire: Cabinet Beau de Loménie
(86) Numéro de dépôt international: PCT/FR2023/050330
(87) Numéro de publication internationale: WO 2023/180648

(56) Documents cités:
- DE-A1- 10 129 514
- US-A1- 2017 100 894

## Description

### Domaine Technique

Le présent exposé concerne le domaine des peaux utilisées dans les moteurs aéronautiques, notamment, mais pas uniquement, dans les carters ou les panneaux acoustiques de ces moteurs. Plus précisément, le présent exposé concerne un procédé de fabrication d'une telle peau, et une peau obtenue par un tel procédé.

### Technique antérieure

De manière connue, les peaux utilisées dans les moteurs aéronautiques, par exemple dans les carters où les panneaux acoustiques présents dans ces moteurs, sont déposées par drapage automatisé de composite à matrice thermodurcissable. Plus précisément, une peau est drapée sur un outillage de drapage, plus précisément sur la surface (ou substrat) dudit outillage. Ce drapage est effectué par des outils de dépose connus en soi, tels que des robots dits « AFP », pour « automated fiber placement » en anglais, déposant successivement des mèches, ou bandes pré-imprégnées parallèles entre elles et sur plusieurs couches, dites « plis », ou encore par « ATL » pour « automated tape layer » en anglais, par dépôt de nappes pré-imprégnées de largeur plus importante que les bandes déposées dans la technique « AFP ». Ces nappes sont déposées l'une après l'autre. La peau est ensuite polymérisée dans un autoclave pendant plusieurs heures.

A l'heure actuelle, des matériaux composites à matrice thermoplastique sont également utilisés et présentent de nombreux avantages par rapport aux thermodurcissables. En particulier, les liaisons chimiques, dans une résine thermoplastique, se créent de manière réversible. Il suffit de chauffer la résine pour qu'elle fonde et pour pouvoir ainsi la réutiliser (à l'inverse, une résine thermodurcissable, une fois polymérisée, ne peut plus être utilisée, ou difficilement). Les matériaux thermoplastiques peuvent donc être réutilisés « à l'infini ». Ils peuvent également être stockés à température ambiante. DE 101 29 514 A1 divulgue un exemple de procédé comprenant le drapage d'un matériau thermoplastique.

Parmi les résines thermoplastiques connues dans l'industrie aéronautique et compatibles avec l'environnement moteur, les résines dites « semi-cristallines » sont utilisées. Les matériaux semi-cristallins présentent comme avantages d'être résistants aux agents chimiques, au feu, à l'abrasion. Ils possèdent également de meilleures propriétés mécaniques.

Cependant, pour obtenir les propriétés cibles de ce matériau, notamment un niveau de cristallinité souhaité, il est nécessaire de maitriser le cycle thermique de mise en œuvre. Lors du drapage des peaux, les outils de dépose précités permettent d'apporter la pression nécessaire et la chaleur nécessaire à l'adhésion du dernier pli déposé avec celui en cours de dépôt, mais ne permettent pas de maitriser le cycle thermique et donc le niveau de cristallinité. Pour ce faire, la gestion du cycle thermique est aujourd'hui obtenue par un deuxième processus, via l'application d'un cycle thermique en autoclave ou en étuve.

Ces solutions de consolidation en autoclave et en étuve engendrent de fortes consommations d'énergie, et sont couteuses. De plus, le processus de fabrication de ces peaux est morcelé, ce qui ralentit le cycle de fabrication.

Il existe donc un besoin pour palier au moins en partie les inconvénients précités.

### Exposé de l'invention

Le présent exposé concerne un procédé de fabrication d'au moins une peau, notamment de panneau acoustique pour moteur aéronautique, comprenant le drapage d'un matériau thermoplastique sur une surface d'un outillage de drapage, par l'intermédiaire d'un outil de dépose configuré pour exercer une pression sur le matériau thermoplastique et pour chauffer ce dernier au cours de son drapage, dans lequel l'outillage de drapage comprend un dispositif de régulation thermique configuré pour chauffer localement la surface de l'outillage de drapage.

On comprend que la peau est déposée par drapage directement sur l'outillage de drapage, plus précisément sur la surface (ou substrat) dudit outillage.

Le drapage de la peau est effectué par un outil de dépose pouvant être un robot « AFP » ou « ATL », par dépôts successifs de bandes ou de nappes de renforts pré-imprégnées de matériau thermoplastique. L'outil de dépose peut par exemple comprendre une tête de dépose permettant d'apporter la pression et la chaleur nécessaires à l'adhésion des bandes entre elles, notamment du dernier pli déposé avec celui en cours de dépôt.

Par ailleurs, le dispositif de régulation thermique de l'outillage de drapage permet d'apporter localement de la chaleur à la surface de l'outillage de drapage, et donc de chauffer ou refroidir localement le matériau thermoplastique déjà déposé sur ladite surface. Cette modulation et cet apport de chaleur supplémentaire de manière locale et ciblée permettent de contrôler le refroidissement du matériau thermoplastique venant d'être déposé, et venant donc d'être chauffé par l'outil de dépose. Plus précisément, grâce à l'apport locale de chaleur, le gradient de température en refroidissement est maitrisé. La vitesse de refroidissement du matériau thermoplastique venant d'être chauffé par l'outil de dépose peut ainsi être contrôlée, en étant notamment plus lente que si le matériau thermoplastique était immédiatement exposé à la température ambiante. On comprend ainsi que l'apport local de chaleur par le dispositif de régulation thermique est effectué de préférence à une température inférieure à la chaleur apportée par l'outil de dépose, et supérieure à la température ambiante. Un apport de chaleur locale à la surface de l'outillage de drapage avant que le matériau thermoplastique ne soit déposé peut également permettre une montée en températures progressive de ladite surface avant la dépose.

L'apport local de chaleur permet notamment de cibler les zones devant être plus ou moins rapidement chauffées ou refroidies, de manière à obtenir le degré de cristallinité souhaité en fonction des zones de la peau, et des épaisseurs de celle-ci, pas nécessairement homogènes sur toute sa surface, car dépendants du nombre de plis.

Ce procédé permet ainsi de maîtriser le niveau de cristallinité du matériau, et ainsi d'assurer la santé matière et les bonnes propriétés du matériau, en lui apportant notamment une bonne adhésion entre les fibres et la matrice du matériau, et ce, sans nécessité de cycles thermiques supplémentaires en autoclave à forte consommation d'énergie. Il est ainsi possible de limiter les coûts et d'améliorer la rapidité des cycles de fabrication.

Dans certains modes de réalisation, l'outillage de drapage comprend une pluralité de cellules disposées sous la surface dudit outillage de drapage sur lequel est fabriquée la peau, le dispositif de régulation thermique étant configuré pour chauffer chaque cellule individuellement.

Par « cellules », on comprend des cavités, ou compartiments, disposés sous la surface de l'outillage de drapage. En chauffant individuellement chacune de ces cellules, il est ainsi possible de chauffer localement la surface de l'outillage de drapage. Cela permet de préchauffer certaines zones de la surface de l'outillage de drapage, juste avant que n'y soit déposé le matériau thermoplastique, de sorte à maitriser le gradient thermique en chauffe subi par celui-ci, et également d'améliorer le contrôle du refroidissement du matériau thermoplastique venant d'être déposé sur cette surface au cours de la fabrication de la peau.

Dans certains modes de réalisation, le chauffage local de la surface de l'outillage de drapage est effectué par induction, par l'intermédiaire d'un fluide caloporteur ou par air pulsé.

En outre, lorsque l'outillage de drapage comprend une pluralité de cellules disposées sous la surface de l'outillage de drapage, chaque cellule peut être chauffée individuellement par induction, par l'intermédiaire d'un fluide caloporteur ou par air pulsé. En particulier, le chauffage local par air pulsé permet de varier d'une manière significative la quantité et la durée de l'application de l'apport calorifique avec chaque pli déposé, ce qui est particulièrement avantageux compte tenu de la forte capacité d'isolation thermique des résines thermoplastiques. Cette technique permet notamment une variation dynamique en température compatible avec les vitesses de drapage automatisé pouvant aller de 0,1 m/min à 60 m/min. En outre, le chauffage par air pulsé permet une faible consommation d'énergie du fait sa capacité de variation dynamique locale en température.

Dans certains modes de réalisation, le chauffage local de la surface de l'outillage de drapage est effectué par air pulsé, chaque cellule étant alimentée en air pulsé par l'intermédiaire d'un conduit, chaque conduit étant équipé d'un élément de chauffe contrôlé individuellement par le dispositif de régulation thermique.

Dans certains modes de réalisation, le dispositif de régulation thermique comprend une unité de contrôle configurée pour synchroniser le chauffage local de la surface de l'outillage de drapage avec le déplacement de l'outil de dépose.

En particulier, lorsque l'outillage de drapage comprend une pluralité de cellules disposées sous la surface de l'outillage de drapage, l'unité de contrôle peut contrôler individuellement chaque cellule, et notamment chaque élément de chauffe, pour apporter de la chaleur localement en fonction de la position de l'outil de dépose et de son déplacement. Cette synchronisation permet d'améliorer encore le contrôle du refroidissement local du matériau thermoplastique venant d'être déposé et donc chauffé par l'outil de dépose, et ainsi de maîtriser davantage le degré de cristallinité du matériau, améliorant par conséquent la santé matière du matériau.

Dans certains modes de réalisation, une surface de dépose étant définie comme la surface de contact entre l'outil de dépose et la surface de l'outillage de drapage, l'outil de dépose étant configuré pour chauffer la surface de l'outillage de drapage à une première température en aval de la surface de dépose, et le dispositif de régulation thermique étant configuré pour chauffer localement la surface de l'outillage de drapage en amont de la surface de dépose à une deuxième température inférieure à la première température, un sens amont aval étant défini par rapport au sens de déplacement de l'outil de dépose par rapport à la surface de l'outillage de drapage.

On comprend que lors de la fabrication de la peau par drapage, l'outil de dépose se déplace par rapport à la surface de l'outillage de drapage, et la surface de dépose se déplace donc en conséquence. Cette surface de dépose peut notamment être la surface de contact entre un rouleau de compactage et la surface de l'outillage de drapage. Ainsi, en amont de la surface de dépose se trouve la (ou les) bande(s) pré-imprégnée(s) de matériau thermoplastique venant d'être déposée(s) par l'outil de dépose au cours de son déplacement, et en aval de la surface de dépose se trouve la région de la surface de l'outillage de drapage, juste avant que ladite (ou lesdites) bande(s) ne soi(en)t déposée(s).

Le chauffage de cette région aval à la première température permet de faciliter la dépose et d'améliorer l'adhésion des bandes de matériau thermoplastique entre elles. Par ailleurs, le chauffage local de la surface de l'outillage de drapage, en amont de la surface de dépose où se trouve la bande de renfort pré-imprégnée de matériau thermoplastique venant d'être déposée par l'outil de dépose et chauffée par ce dernier, à la deuxième température inférieure à la première température, permet de refroidir ce matériau tout en diminuant la différence de températures subie par ce dernier, et donc en contrôlant son refroidissement.

Dans certains modes de réalisation, le dispositif de régulation thermique est configuré pour réguler localement la température de la surface de l'outillage de drapage par gradients locaux de chauffe compris entre 30°CMmin et 100°C/min.

Il est ainsi possible de chauffer ou refroidir localement le matériau thermoplastique par rampes de chauffe plus ou moins rapides, en fonction du niveau de cristallinité souhaité.

Dans certains modes de réalisation, le matériau thermoplastique est un polyétheréthercétone, un polyéthercétonecétone ou un polyaryléthercétone. Ces résines thermoplastiques dites « semi-cristallines » présentent l'avantage d'être particulièrement performantes et compatibles avec l'environnement moteur aéronautique.

Dans certains modes de réalisation, au cours de la fabrication de la première peau, l'outil de dépose des bandes successives de renfort pré-imprégnées du matériau thermoplastique, par l'intermédiaire d'un rouleau de compactage exerçant la pression sur le matériau thermoplastique au cours de son drapage.

L'outil de dépose appuie ainsi sur les bandes pré-imprégnées de matériau thermoplastique, à la manière d'un rouleau de scotch déroulé à l'aide d'un pistolet dévidoir ou d'un dérouleur, par l'intermédiaire du rouleau de compactage. Cette pression exercée par le rouleau de compactage permet d'améliorer l'adhésion des bandes de matériau thermoplastique entre elles, d'une couche à l'autre, c'est-à-dire d'un pli à l'autre.

Dans certains modes de réalisation, l'outil de dépose chauffe le matériau thermoplastique au cours de son drapage par l'intermédiaire d'un laser.

L'utilisation du laser permet de faciliter l'orientation de la source de chaleur, en orientant notamment le laser vers le rouleau de compactage, et donc vers la bande de matériau thermoplastique en cours de drapage. Cet apport ciblé de chaleur par l'outil de dépose permet d'améliorer l'adhésion des bandes entre elles, notamment du dernier pli déposé et celui en cours de dépose. De manière alternative, l'outil de dépose peut chauffer le matériau thermoplastique au cours de son drapage par l'intermédiaire d'une lampe, d'une torche, ou tout autre moyen adapté.

Le présent exposé concerne également un procédé de fabrication d'un panneau acoustique pour moteur aéronautique, comprenant :
- la fabrication d'une première peau par un procédé selon l'un quelconque des modes de réalisation précédents,
- la fabrication d'un complexe acoustique comprenant une pluralité d'alvéoles, sur la première peau, et
- la fabrication d'une deuxième peau par drapage du matériau thermoplastique sur le complexe acoustique, par l'intermédiaire de l'outil de dépose.

On comprend que la première peau est déposée par drapage directement sur l'outillage de drapage, plus précisément sur la surface (ou substrat) dudit outillage, tandis que la deuxième peau est déposée sur le complexe acoustique, lui-même formé préalablement sur la première peau, par exemple par fabrication additive.

Dans certains modes de réalisation, le complexe acoustique est fabriqué en utilisant un matériau compatible avec la première et la deuxième peau, de préférence en utilisant le même matériau thermoplastique que pour la première et la deuxième peau.

Dans certains modes de réalisation, le complexe acoustique comprend un matériau thermoplastique renforcé. Le matériau thermoplastique peut par exemple comprendre une matrice thermoplastique et des charges en fibre de carbone, permettant de renforcer la tenue mécanique du panneau acoustique.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en section d'un turboréacteur comprenant un panneau acoustique comprenant une peau selon un mode de réalisation de l'invention, dans un plan longitudinal du turboréacteur,
[Fig. 2] La figure 2 représente une vue partielle en perspective d'un panneau acoustique comprenant une peau selon un mode de réalisation de l'invention,
[Fig. 3] La figure 3 représente schématiquement un outil de dépose se déplaçant sur un outillage de drapage dans un procédé de fabrication selon un mode de réalisation de l'invention,
[Fig. 4] La figure 4 représente schématiquement une vue du dessous d'un ensemble de cellules d'un outillage de drapage utilisé dans un procédé de fabrication d'une peau selon un mode de réalisation de l'invention,
[Fig. 5] La figure 5 représente schématiquement les différentes étapes d'un procédé de fabrication de panneau acoustique,

### Description des modes de réalisation

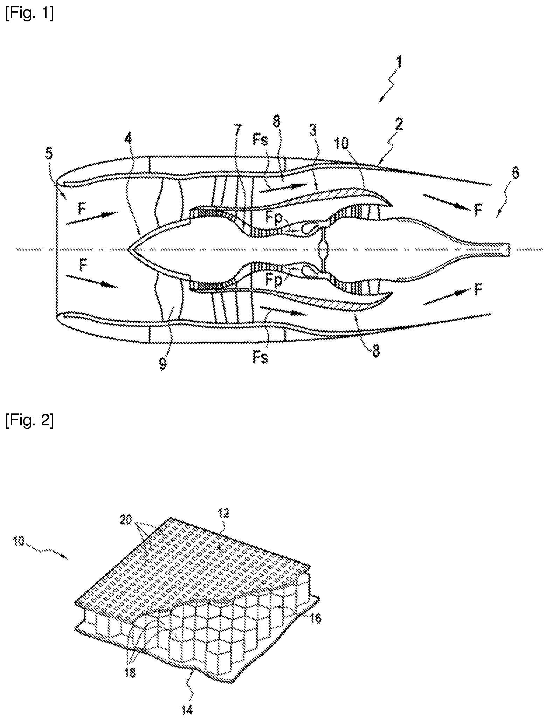

Sur la figure 1 est représentée une vue en section d'un turboréacteur 1 selon un mode de réalisation de l'invention, dans un plan longitudinal du turboréacteur 1. Le turboréacteur 1 comprend une nacelle 2, un carter intermédiaire 3 et un carter interne 4. La nacelle 2 et les deux carters 3 et 4 sont coaxiaux. La nacelle 2 définit à une première extrémité un canal 6 d'entrée 5 d'un écoulement de fluide et à une seconde extrémité, opposée à la première extrémité, un canal d'échappement 6 d'un écoulement de fluide. La nacelle 2 et le carter intermédiaire 3 délimitent entre eux une veine primaire 7 d'écoulement de fluide. Le carter intermédiaire 3 et le 5 carter interne 4 délimitent entre eux une veine secondaire 8 d'écoulement de fluide. La veine primaire 7 et la veine secondaire 8 sont disposés selon une direction axiale du turboréacteur entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire Fp circulant dans la veine primaire 7 et en un flux secondaire Fs circulant dans la veine secondaire 8. Le turboréacteur 1 comprend en outre au moins un panneau acoustique 10 configuré pour atténuer les ondes acoustiques émises par le turboréacteur avant que ces ondes ne s'échappent à l'extérieure, radialement, de la nacelle 2 du turboréacteur 1. Le panneau acoustique 10 est configuré pour atténuer des ondes acoustiques dont la fréquence appartient à une plage de fréquences prédéterminée. Dans le mode de réalisation illustré sur la figure 1, le panneau 10 est intégré au carter intermédiaire 3 et au carter interne 4. Bien qu'ils ne soient pas représentés, d'autres panneaux acoustiques peuvent être intégrés à la nacelle 2 et au carter interne 4 notamment.

La suite de la description décrit un exemple dans lequel une peau, fabriquée par un procédé conforme à l'invention, est utilisée dans le panneau acoustique 10. On notera cependant que cet exemple n'est pas limitatif, la peau pouvant être utilisée pour d'autres parties du turboréacteur 1, notamment le carter intermédiaire 3, le carter interne 4 ou la nacelle 2, sans nécessairement faire partie d'un panneau acoustique.

Sur la figure 2 est représentée une vue partielle en perspective d'un panneau acoustique 10 comprenant une peau externe (ci-après nommé première peau) obtenue par un procédé selon un mode de réalisation de l'invention. De manière connue, les panneaux acoustiques 10 sont des résonateurs de Helmholtz. Typiquement, un panneau acoustique 10 tel que celui illustré sur la figure 2 comprend un étage de structure en nid d'abeille. Le panneau acoustique 10 comprend notamment une première peau 12 perforée, une deuxième peau 14 pleine, et complexe acoustique 16, qui est une âme à structure alvéolaire prise en sandwich entre ces peaux. Le complexe acoustique 16 est constitué d'un réseau d'alvéoles 18 en forme de nid d'abeille. On notera que cette structure en nid d'abeille n'est pas limitative, d'autres types de structure, fabricable par fabrication additive comme décrit plus loin, pouvant être applicable sans sortir de la portée de l'invention. Quant à la première peau 12 perforée, elle est fixée au complexe acoustique 16 et est disposée, dans le cadre de l'invention, du côté de la veine primaire 7 du turboréacteur 1. Cette peau est perforée par une pluralité d'orifices 20, Chaque orifice 20 débouchant sur une alvéole 18 du complexe acoustique 16, plusieurs orifices 20 pouvant déboucher sur une même alvéole 18.

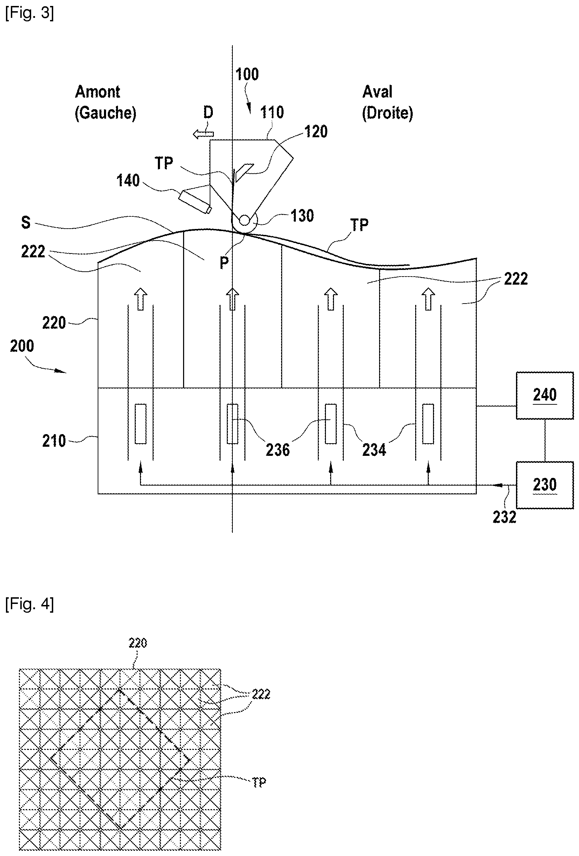

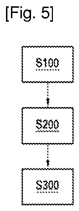

Un procédé de fabrication d'une peau selon un mode de réalisation conforme au présent exposé, utilisé dans le cadre de la fabrication d'un tel panneau acoustique 10, va être ensuite décrit en référence aux figures 3 à 5.

Dans un premier temps, la première peau 12 est fabriquée par drapage automatique (étape S100), notamment, mais de manière non limitative, par la technique « AFP » (pour « automated fiber placement » en anglais) ou « ATL » (pour « automated tape layer » en anglais) connues en soi, par dépose successive de mèches, ou bandes pré-imprégnées parallèles entre elles et sur plusieurs couches, dites « plis ». Les bandes déposées comprennent un matériau thermoplastique TP (plus simplement nommé « matériau TP » dans la suite de la description), notamment, mais de manière non limitative, un polyétheréthercétone PEEK, un polyéthercétonecétone PEKK, un polyaryléthercétone PAEK ou un polyphenylsulfone PPSU.

Ces bandes en matériau TP sont déposées par un outil de dépose 100, sur un outillage de drapage 200, représentés schématiquement sur la figure 3. L'outil de dépose 100 comprend une tête de dépose 110, alimentée en matériau TP sous forme de bande, par un dispositif d'alimentation (non représenté). Un module de découpe 120 permet de couper la bande de matériau TP lorsque cette dernière a atteint la longueur souhaitée.

Un rouleau de compactage 130 permet d'appliquer la bande de matériau TP sur une surface S de l'outillage de drapage 200 décrit plus bas, en exerçant une pression sur cette bande au cours de son drapage. Plus précisément, au cours du drapage, l'outil de dépose 100 se déplace dans la direction D représentée par une flèche sur la figure 3. Le sens de déplacement de l'outil de dépose 100, dans la direction D, définit selon le présent exposé, un sens amont-aval, correspondant à un sens droite-gauche sur la figure 3. Ainsi, la région à droite du rouleau de compactage 130 sur la figure 3, plus précisément à droite d'une surface de drapage P, qui est la surface de contact entre le rouleau de compactage 130 et la surface S (la surface de drapage P se déplaçant elle-même quand l'outil de dépose 100 se déplace dans la direction D), correspond à une région amont dans laquelle le matériau TP a déjà été déposé, alors que la région à gauche de la surface de drapage P sur cette figure correspond à une région aval dans laquelle le matériau TP va être déposé. Ainsi, au cours de son déplacement, le rouleau de compactage 130 roule vers l'aval sur la surface S, en prenant la bande de matériau TP en train d'être déposé en sandwich entre le rouleau de compactage 130 et la surface S.

Par ailleurs, une source de chaleur, notamment un laser 140 dirigé de préférence vers le rouleau de compactage 130 et sur le matériau TP, permet de chauffer, dans la région aval, la bande de matériau TP en train d'être déposée. Le rouleau de compactage 130 et le laser 140 permettent d'apporter la pression et la chaleur nécessaires à l'adhésion des bandes du matériau TP entre elles, notamment du dernier pli déposé et celui en cours de dépôt. En particulier, le laser 140 peut chauffer le matériau TP à des températures comprises entre 100°C et 500°C, pour permettre l'adhésion des bandes entre elles, et le rouleau de compactage 130 peut exercer des forces de compactage comprises entre 200 N et 500 N, et jusqu'à 1200 N pour les configurations « in-situ ».

L'outillage de drapage 200 comprend une portion inférieure 210, et une portion supérieure 220. La surface supérieure de la portion supérieure 220 est la surface S sur laquelle est déposé, par drapage, le matériau TP lors de la fabrication de la première peau 12. Cette surface S présente une courbure, représentée à titre illustratif sur la figure 3, mais correspondant de manière générale à la forme finale du panneau acoustique 10 destiné à être fabriqué. Par exemple, si le panneau acoustique à fabriquer présente une forme annulaire, la surface S présentera une forme équivalente, en arc de cercle.

Le volume formé par la portion supérieure 220 est divisé en une pluralité de cellules 222 (ou chambres, ou compartiments) indépendantes les unes des autres. Afin d'en faciliter la description, seulement quatre cellules 222 sont représentées sur la figure 3, leurs dimensions, notamment leur largeur, étant volontairement exagérées. En réalité, l'outillage de drapage 200 comprend dans sa portion supérieure 220 un nombre élevé de cellules 222, de largeur inférieure à celle illustrée sur cette figure.

A cet égard, la figure 4 représente schématiquement un exemple de répartition et de forme des cellules 222, dans une vue perpendiculaire à la surface S (par exemple une vue du dessous). Ces cellules 222, de section triangulaire, sont disposées de manière à former un réseau sous la surface S. Le carré en pointillés représente le matériau TP d'une portion au moins de la première peau 12 déposée sur la surface S, c'est-à-dire juste au-dessus des cellules 222. Il est ainsi possible de chauffer localement, de manière ciblée, de petites zones de la surface S, et donc des petites zones du matériau TP déposé sur la surface S, en chauffant chaque cellule 222 individuellement, de manière à moduler l'apport de chaleur.

Pour ce faire, l'outillage de drapage 200 comprend un dispositif de régulation thermique configuré pour chauffer chaque cellule 222 individuellement. Le dispositif de régulation thermique comprend une unité d'alimentation en air comprimé 230 configurée pour alimenter individuellement, par l'intermédiaire d'un canal d'alimentation en air comprimé 232, une pluralité de conduits 234 communicant chacun individuellement avec l'une des cellules 222. De plus, chaque conduit 234 est équipé d'un élément de chauffe 236, par exemple une résistance chauffante, permettant de chauffer l'air s'écoulant dans le conduit 234 avant son injection dans la cellule 222.

Le dispositif de régulation thermique comprend également une unité de contrôle 240, configurée pour contrôler l'unité d'alimentation en air comprimé 230, et pour contrôler individuellement chaque élément de chauffe 236. Ainsi, l'unité de contrôle est configurée pour contrôler les conduits 234, et par conséquent les cellules 222 devant être alimentées en air comprimé, tout en régulant la température des éléments de chauffe 236, individuellement, de manière à contrôler la température de l'air pulsé ainsi injecté dans chaque cellule 222.

Par ailleurs, bien que cette connexion ne soit pas illustrée, l'unité de contrôle 240 peut également être connectée à l'outil de dépose 100, de manière à pouvoir synchroniser le chauffage des cellules 222 avec le déplacement de l'outil de dépose 100 au cours du drapage de la première peau 12 lors de l'étape S100. Plus précisément, en détectant la position de l'outil de dépose 100 à un instant donné au cours de son déplacement, et notamment la position de la surface de drapage P, l'unité de contrôle peut alimenter les cellules 222 disposées en amont de la surface de drapage P, de manière à cibler les zones de la surface S où vient d'être déposé le matériau TP, et ainsi contrôler le refroidissement de ce dernier. L'unité de contrôle peut également alimenter les cellules 222 disposées en aval de la surface de drapage P, de manière à cibler les zones de la surface S où va être déposé le matériau TP, et ainsi contrôler la montée en température de ce dernier, afin de limiter le gradient de température induit par le laser 140.

Elle peut ainsi, par l'intermédiaire des éléments de chauffe 236, réguler la température de l'air alimentant lesdites cellules 222, et la vitesse des rampes de chauffe ou de refroidissement, en fonction de l'état final souhaité du matériau (niveau de cristallinité), et également en fonction du nombre de plis déposés, et donc de l'épaisseur de la première peau 12 en cours de fabrication. En effet, lorsque N bandes de matériau TP ont été superposées les unes sur les autres, la bande N+1, déposée sur la bande N, sera séparée de la surface S par lesdites N bandes. Compte tenu du caractère isolant du matériau TP, il peut être nécessaire d'adapter la température et la vitesse de chauffe locales des cellules 222, afin d'obtenir un niveau de cristallinité équivalent pour chaque pli. Par exemple, l'unité de contrôle 240 peut réguler localement la température de la surface S par gradients locaux de chauffe compris entre 30°C/min et 100°C/min.

De manière générale, l'unité de contrôle 240 peut être configurée pour contrôler individuellement le chauffage de chaque cellule 222 en fonction de la position de l'outil de dépose 100, de sa vitesse de déplacement, de la température de chauffe du laser 140, et du nombre de plis déposés sur la surface S. Par exemple, lorsque le laser 140 chauffe la bande de matériau TP en cours de drapage à une température T1 en aval de la surface de drapage P, l'unité de contrôle 240 peut contrôler les éléments de chauffe 236 de manière à ce que les cellules 222 situées en amont de la surface de drapage P soient chauffées à une température T2 inférieure à T1, de manière à contrôler le gradient de températures ΔT, où ΔT = T1 - T2, en tenant compte des paramètres tels que le nombre de plis présents à cette position et à cet instant, la trajectoire ou la vitesse de déplacement de l'outil de dépose 100.

Dans l'exemple décrit ci-dessus, le dispositif de régulation thermique utilise un système à air pulsé pour chauffer individuellement les cellules 222. On notera que cet exemple n'est pas limitatif, d'autres moyens tels que l'induction ou un fluide caloporteur pouvant être utilisés.

L'étape S100 de fabrication de la première peau 12 est achevée lorsque l'ensemble des plis permettant d'obtenir la forme et l'épaisseur souhaitée de la peau, ont été déposés sur la surface S de l'outillage de drapage 200, tout en chauffant localement cette surface S de la manière décrite ci-dessus.

Ensuite, le complexe acoustique 16 est fabriqué directement sur la première peau 12, par fabrication additive (étape S200), par l'intermédiaire d'un outil prévu à cet effet. Le complexe acoustique 16 est de préférence fabriqué en un même matériau thermoplastique que la première peau 12, et peut en outre être chargé par des fibres de carbone, permettant de le renforcer.

La deuxième peau 14 est ensuite déposée sur la face du complexe acoustique 16 opposée à la face sur laquelle est fixée la première peau 12 (étape S300), de manière à ce que la première et la deuxième peau soient sensiblement parallèles l'une à l'autre. La deuxième peau 14 est également fabriquée en un même matériau TP que la première peau 12, par drapage automatisé, par l'intermédiaire du même outil de dépose 100. Toutefois, contrairement à la première peau 12, les bandes de matériau TP de la deuxième peau 14 sont chauffées uniquement par le laser 140, et pressées par le rouleau de compactage 130, de manière à faire adhérer les bandes entre elles. On notera que la pression appliquée sur cette deuxième peau 14 est compatible de la rigidité du complexe acoustique 16. Le dispositif de régulation thermique de l'outillage de drapage 200 décrit ci-dessus n'est pas utilisé, la deuxième peau 14 étant déposée sur le complexe acoustique 16, et non sur la surface S de l'outillage de drapage 200. On notera néanmoins que le contrôle de la cristallinité de la deuxième peau 14 est moins critique que pour la première peau 12, cette dernière étant en contact avec le flux primaire Fp et remplissant la fonction acoustique.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

## Revendications

1. Procédé de fabrication d'au moins une peau (12), notamment de panneau acoustique (10) pour moteur aéronautique, comprenant le drapage d'un matériau thermoplastique (TP) sur une surface (S) d'un outillage de drapage (200), par l'intermédiaire d'un outil de dépose (100) configuré pour exercer une pression sur le matériau thermoplastique (TP) et pour chauffer ce dernier au cours de son drapage, dans lequel l'outillage de drapage (200) comprend un dispositif de régulation thermique configuré pour chauffer localement la surface (S) de l'outillage de drapage (200), le dispositif de régulation thermique comprenant une unité de contrôle (240) configurée pour synchroniser le chauffage local de la surface (S) de l'outillage de drapage (200) avec le déplacement de l'outil de dépose (100).

2. Procédé selon la revendication 1, dans lequel l'outillage de drapage (200) comprend une pluralité de cellules (222) disposées sous la surface (S) dudit outillage de drapage (200) sur lequel est fabriquée la peau (12), le dispositif de régulation thermique étant configuré pour chauffer chaque cellule (222) individuellement.

3. Procédé selon la revendication 1 ou 2, dans lequel le chauffage local de la surface (S) de l'outillage de drapage (200) est effectué par induction, par l'intermédiaire d'un fluide caloporteur ou par air pulsé.

4. Procédé selon la revendication 3, dans lequel le chauffage local de la surface (S) de l'outillage de drapage (200) est effectué par air pulsé, chaque cellule (222) étant alimentée en air pulsé par l'intermédiaire d'un conduit (234), chaque conduit (234) étant équipé d'un élément de chauffe (236) contrôlé individuellement par le dispositif de régulation thermique.

5. Procédé selon l'une quelconque des revendications 1 à 4, dans lequel, une surface de dépose (P) étant définie comme la surface de contact entre l'outil de dépose (100) et la surface (S) de l'outillage de drapage (200), l'outil de dépose (100) étant configuré pour chauffer la surface (S) de l'outillage de drapage (200) à une première température en aval de la surface de dépose (P), et le dispositif de régulation thermique étant configuré pour chauffer localement la surface (S) de l'outillage de drapage (200) en amont de la surface de dépose (P) à une deuxième température inférieure à la première température, un sens amont aval étant défini par rapport au sens de déplacement (D) de l'outil de dépose (100) par rapport à la surface (S) de l'outillage de drapage (200).

6. Procédé selon l'une quelconque des revendications 1 à 5, dans lequel le dispositif de régulation thermique est configuré pour réguler localement la température de la surface (S) de l'outillage de drapage (200) par gradients locaux de chauffe compris entre 30°C/min et 100°C/min.

7. Procédé selon l'une quelconque des revendications 1 à 6, dans lequel le matériau thermoplastique (TP) est un polyétheréthercétone, un polyéthercétonecétone ou un polyaryléthercétone.

8. Procédé selon l'une quelconque des revendications 1 à 7, dans lequel, au cours de la fabrication de la première peau (12), l'outil de dépose (100) dépose des bandes successives de renfort pré-imprégnées du matériau thermoplastique (TP), par l'intermédiaire d'un rouleau de compactage (130) exerçant la pression sur le matériau thermoplastique (TP) au cours de son drapage.

9. Procédé selon l'une quelconque des revendications 1 à 8, dans lequel l'outil de dépose (100) chauffe le matériau thermoplastique (TP) au cours de son drapage par l'intermédiaire d'un laser (140).

10. Procédé de fabrication d'un panneau acoustique (10) pour moteur aéronautique, comprenant :
- la fabrication d'une première peau (12) par un procédé selon l'une quelconque des revendications 1 à 9,
- la fabrication d'un complexe acoustique (16) comprenant une pluralité d'alvéoles (18), sur la première peau (12), et
- la fabrication d'une deuxième peau (14) par drapage du matériau thermoplastique (TP) sur le complexe acoustique (16), par l'intermédiaire de l'outil de dépose (100).

## Patentansprüche

1. Herstellungsverfahren mindestens einer Haut (12), insbesondere einer Akustikplatte (10) für einen Luftfahrzeugmotor, umfassend das Drapieren eines thermoplastischen Materials (TP) auf eine Oberfläche (S) eines Drapierwerkzeugs (200) mittels eines Aufbringwerkzeugs (100), das konfiguriert ist, um Druck auf das thermoplastische Material (TP) auszuüben und dieses im Verlauf seines Drapierens zu erhitzen, wobei das Drapierwerkzeug (200) eine Wärmeregulierungsvorrichtung umfasst, die konfiguriert ist, um die Oberfläche (S) des Drapierwerkzeugs (200) stellenweise zu erwärmen, die Wärmeregulierungsvorrichtung umfassend eine Steuereinheit (240), die konfiguriert ist, um die stellenweise Erwärmung der Oberfläche (S) des Drapierwerkzeugs (200) mit der Bewegung des Aufbringwerkzeugs (100) zu synchronisieren.

2. Verfahren nach Anspruch 1, wobei das Drapierwerkzeug (200) eine Vielzahl von Zellen (222) umfasst, die unter der Oberfläche (S) des Drapierwerkzeugs (200), auf dem die Haut (12) hergestellt wird, angeordnet sind, wobei die Wärmeregelungsvorrichtung konfiguriert ist, um jede Zelle (222) individuell zu erwärmen.

3. Verfahren nach Anspruch 1 oder 2, bei dem das stellenweise Erwärmen der Oberfläche (S) des Drapierwerkzeugs (200) durch Induktion, über ein Wärmeträgermedium oder durch Gebläseluft erfolgt.

4. Verfahren nach Anspruch 3, wobei das stellenweise Erwärmen der Oberfläche (S) des Drapierwerkzeugs (200) durch Gebläseluft erfolgt, wobei jede Zelle (222) über eine Leitung (234) mit Gebläseluft versorgt wird, wobei jede Leitung (234) mit einem Heizelement (236) ausgestattet ist, das von der Wärmeregulierungsvorrichtung individuell gesteuert wird.

5. Verfahren nach einem der Ansprüche 1 bis 4, wobei eine Aufbringfläche (P) als die Kontaktfläche zwischen dem Aufbringwerkzeug (100) und der Oberfläche (S) des Drapierwerkzeugs (200) definiert ist, wobei das Aufbringwerkzeug (100) konfiguriert ist, um die Oberfläche (S) des Drapierwerkzeugs (200) auf eine erste Temperatur stromabwärts von der Aufbringfläche (P) zu erwärmen, und wobei die Wärmeregulierungsvorrichtung konfiguriert ist, um die Oberfläche (S) des Drapierwerkzeugs (200) stromaufwärts von der Aufbringfläche (P) stellenweise auf eine zweite Temperatur zu erwärmen, die niedriger ist als die erste Temperatur, wobei eine stromaufwärts-abwärts gerichtete Richtung in Bezug auf die Bewegungsrichtung (D) des Aufbringwerkzeugs (100) in Bezug auf die Oberfläche (S) des Drapierwerkzeugs (200) definiert ist.

6. Verfahren nach einem der Ansprüche 1 bis 5, wobei die Wärmeregulierungsvorrichtung konfiguriert ist, um die Temperatur der Oberfläche (S) des Drapierwerkzeugs (200) stellenweise durch stellenweise Heizgradienten zwischen 30 °C/Min und 100 °C/Min zu regulieren.

7. Verfahren nach einem der Ansprüche 1 bis 6, wobei das thermoplastische Material (TP) ein Polyetheretherketon, ein Polyetherketonketon oder ein Polyaryletherketon ist.

8. Verfahren nach einem der Ansprüche 1 bis 7, wobei das Aufbringwerkzeug (100) im Verlauf der Herstellung der ersten Haut (12) aufeinanderfolgende, vorimprägnierte Verstärkungsstreifen des thermoplastischen Materials (TP) mittels einer Verdichtungswalze (130) aufbringt, die im Verlauf seines Drapierens Druck auf das thermoplastische Material (TP) ausübt.

9. Verfahren nach einem der Ansprüche 1 bis 8, wobei das Aufbringwerkzeug (100) das thermoplastische Material (TP) im Verlauf seines Drapierens mittels eines Lasers (140) erhitzt.

10. Herstellungsverfahren einer Akustiklatte (10) für einen Luftfahrzeugmotor, umfassend:
- Herstellen einer ersten Haut (12) durch ein Verfahren nach einem der Ansprüche 1 bis 9,
- Herstellen eines akustischen Komplexes (16), umfassend eine Vielzahl von Zellen (18), auf der ersten Haut (12), und
- Herstellen einer zweiten Haut (14) durch Drapieren des thermoplastischen Materials (TP) auf dem akustischen Komplex (16) mittels des Aufbringwerkzeugs (100).

## Claims

1. A method for the manufacture of at least one skin (12), in particular of an acoustic panel (10) for an aeronautical engine, comprising the laying of a thermoplastic material (TP) on a surface (S) of a lay-up tooling (200), via a depositing tool (100) configured to exert a pressure on the thermoplastic material (TP) and to heat the latter while it is being laid, wherein the lay-up tooling (200) comprises a thermal regulation device configured to locally heat the surface (S) of the lay-up tooling (200), the thermal regulation device comprising a control unit (240) configured to synchronize the local heating of the surface (S) of the lay-up tooling (200) with the movement of the depositing tool (100).

2. The method according to claim 1, wherein the lay-up tooling (200) comprises a plurality of cells (222) disposed under the surface (S) of said lay-up tooling (200) on which the skin (12) is manufactured, the thermal regulation device being configured to heat each cell (222) individually.

3. The method according to claim 1 or 2, wherein the local heating of the surface (S) of the lay-up tooling (200) is carried out by induction, via a heat transfer fluid or via pulsed air.

4. The method according to claim 3, wherein the local heating of the surface (S) of the lay-up tooling (200) is carried out by pulsed air, each cell (222) being supplied with pulsed air via a conduit (234), each conduit (234) being equipped with a heating element (236) individually controlled by the thermal regulation device.

5. The method according to any one of claims 1 to 4, wherein, a deposition surface (P) being defined as the contact surface between the depositing tool (100) and the surface (S) of the lay-up tooling (200), the depositing tool (100) being configured to heat the surface (S) of the lay-up tooling (200) to a first temperature downstream of the deposition surface (P), and the thermal regulation device being configured to locally heat the surface (S) of the lay-up tooling (200) upstream of the deposition surface (P) to a second temperature lower than the first temperature, an upstream-downstream direction being defined relative to the direction of movement (D) of the depositing tool (100) relative to the surface (S) of the lay-up tooling (200).

6. The method according to any one of claims 1 to 5, wherein the thermal regulation device is configured to locally regulate the temperature of the surface (S) of the lay-up tooling (200) by local heating gradients comprised between 30°C/min and 100°C/min.

7. The method according to any one of claims 1 to 6, wherein the thermoplastic material (TP) is a polyetheretherketone, a polyetherketoneketone or a polyaryletherketone.

8. The method according to any one of claims 1 to 7, wherein, during the manufacture of the first skin (12), the depositing tool (100) deposits successive prepreg reinforcement strips of the thermoplastic material (TP), by means of a compacting roller (130) exerting a pressure on the thermoplastic material (TP) while it is being laid.

9. The method according to any one of claims 1 to 8, wherein the depositing tool (100) heats the thermoplastic material (TP) during laying using a laser (140).

10. A method for the manufacture of an acoustic panel (10) for an aeronautical engine, comprising:
- manufacturing a first skin (12) by a method according to any one of claims 1 to 9,
- manufacturing an acoustic complex (16) comprising a plurality of cells (18), on the first skin (12), and
- manufacturing a second skin (14) by laying the thermoplastic material (TP) on the acoustic complex (16), by means of the depositing tool (100).
